# EUROPEAN PATENT SPECIFICATION

(11) **EP 3 548 545 B1**
(45) Date of publication and mention of the grant of the patent: **23.12.2020**
(21) Application number: 17811744.6
(22) Date of filing: 02.11.2017
(51) Int. Cl.: C08J 3/12, C08L 33/02, C11D 1/37, C11D 3/37, C11D 11/00

(54) **METHOD FOR PRODUCING A GRANULAR POLYMER BLEND**
VERFAHREN ZUR HERSTELLUNG EINER GRANULATFÖRMIGEN POLYMERMISCHUNG
PROCÉDÉ DE PRODUCTION D'UN MÉLANGE POLYMÈRE GRANULAIRE

(30) Priority: 05.12.2016 US 201662430010 P
(43) Date of publication of application: 09.10.2019
(73) Proprietor: Rohm and Haas Company, Collegeville, PA 19426 (US)
(72) Inventor: BACKER, Scott, Collegeville, PA 19426 (US); BUTTERICK, Robert, Collegeville, PA 19426 (US); ROBERTS, Roy, Collegeville, PA 19426 (US)
(74) Representative: Houghton, Mark Phillip
(86) International application number: PCT/US2017/059631
(87) International publication number: WO 2018/106363

(56) References cited:
- EP-A1- 0 080 222
- EP-A1- 1 431 333
- EP-A1- 2 886 634

## Description

### Background

This invention relates generally to a method for producing a polymer blend in granular form.

Granulated polymers are widely used in formulations where large quantities of water are undesirable, e.g., fabric washing powder, dishwashing powder, dishwashing tablets, water softening powder/tablets and wettable powders containing active ingredients. It is often desirable for granulated polymers to be formed from blends of two or more polymers, thereby allowing the formulator to exploit favorable properties of the constituent polymers. It is also desirable for the blend of polymers to form a single granule, (and not a mixture of granules of each individual polymer) that exhibits compositional homogeneity, high bulk density, low water content, and favorable particle size. For example, EP2886634 discloses a detergent containing two different types of polymers. However, this reference does not disclose a method for producing a granular blend of two polymers, as claimed in the present invention.

EP1431333 discloses processes for the preparation of granules of water soluble polymers used for the preparation of detergent tablets and discloses a process for manufacturing neutralized polymer granules.

### Statement of Invention

The present invention is directed to a method for producing a blend of at least one first polymer and at least one second polymer; wherein the first polymer comprises: (a) polymerized units of 22 to 80 wt % of one or more monoethylenically unsaturated C₃-C₆ carboxylic acid monomers, and (b) polymerized units of 20 to 78 wt % of one or more C₁-C₁₂ alkyl (meth)acrylate monomers, and has a weight-average molecular weight from 20,000 to 100,000; and wherein the second polymer comprises polymerized units of 50 to 100 wt% of one or more monoethylenically unsaturated C₃-C₆ carboxylic acid monomers and has a weight-average molecular weight from 1,000 to 45,000; and wherein the first polymer comprises from 1 to 50 wt% of total weight of the first and second polymers; said method comprising combining at least one first polymer at a pH from 3 to 4 with at least one second polymer at a pH from 2 to 4 to form the blend.

### Detailed Description

All percentages are weight percentages (wt%), and all temperatures are in °C, unless otherwise indicated. All operations are performed at room temperature (18 and 25 °C) unless specified otherwise. Weight average molecular weights, M_{w}, are measured by gel permeation chromatography (GPC) using polyacrylic acid standards, as is known in the art. The techniques of GPC are discussed in detail in Modern Size Exclusion Chromatography, W. W. Yau, J. J. Kirkland, D. D. Bly; Wiley-Interscience, 1979, and in A Guide to Materials Characterization and Chemical Analysis, J. P. Sibilia; VCH, 1988, p. 81-84. The molecular weights reported herein are in units of daltons. As used herein the term "(meth)acrylic" refers to acrylic or methacrylic. Percentages of monomer units in the polymer are based on total polymer weight (dry weight). All references to polymerized carboxylic acid units in the polymers include metal salts of the acid which would be present at pH values near or above the pKa of the carboxylic acid groups. "Alkyl," as used in this specification encompasses straight and branched chain aliphatic groups.

Preferably, a C₃-C₆ carboxylic acid monomer has 3 or 4 carbon atoms; preferably it is selected from the group consisting of acrylic acid (AA) and methacrylic acid (MAA), preferably acrylic acid. Preferably, a C₁-C₁₂ alkyl (meth)acrylate monomer has a C₁-C₆ alkyl group, preferably C₁-C₄. Preferred alkyl groups include, without limitation, methyl, ethyl, propyl, isopropyl, butyl, isobutyl, sec-butyl, tert-butyl, pentyl, and hexyl; preferably methyl, ethyl and butyl; preferably ethyl and butyl.

Preferably, the first polymer is an acrylic polymer, e.g., one having at least 50 wt% total polymerized units of monoethylenically unsaturated C₃-C₆ carboxylic acid monomers and C₁-C₁₂ alkyl (meth)acrylate monomers, preferably at least 75 wt%, preferably at least 85 wt%, preferably at least 90 wt%, preferably at least 95 wt%. Preferably, the first polymer comprises at least 30 wt % polymerized units of C₃-C₆ carboxylic acid monomers, preferably at least 40 wt %, preferably at least 45 wt %, preferably at least 50 wt%, preferably at least 55 wt%, preferably at least 60 wt%; preferably no more than 75 wt%, preferably no more than 70 wt%. Preferably, the first polymer comprises at least 25 wt % polymerized units of C₁-C₁₂ alkyl (meth)acrylate monomers, preferably at least 28 wt%, preferably at least 30 wt%; preferably no more than 70 wt%, preferably no more than 60 wt%, preferably no more than 55 wt%, preferably no more than 50 wt%, preferably no more than 45 wt%, preferably no more than 40 wt%. In a preferred embodiment, ethyl acrylate (EA) units are present in an amount of 12 to 25 wt %, preferably 15 to 20 wt %, and butyl acrylate (BA) units are present in an amount of 12 to 25 wt %, preferably 15 to 20 wt %, based on a total weight of the first polymer.

Preferably, the second polymer comprises at least 60 wt % polymerized units of C₃-C₆ carboxylic acid monomers, preferably at least 65 wt %, preferably at least 70 wt %, preferably at least 75 wt%, preferably at least 80 wt%, preferably at least 85 wt%, preferably at least 90 wt%, preferably at least 95 wt%. In a preferred embodiment, the second polymer comprises polymerized units of a sulfonic acid monomer. Sulfonic acid monomers include, for example, 2-(meth)acrylamido-2-methylpropanesulfonic acid, 4-styrenesulfonic acid, vinylsulfonic acid, 2-sulfoethyl(meth)acrylic acid, 2-sulfopropyl(meth)acrylic acid, 3-sulfopropyl(meth)acrylic acid, and 4-sulfobutyl(meth)acrylic acid and salts thereof. Preferably, the second polymer comprises no more than 35 wt% polymerized units of sulfonic acid monomers, preferably no more than 30 wt%; preferably at least 1 wt%, preferably at least 5 wt%, preferably at least 10 wt%, preferably at least 15 wt%..

Preferably, the first polymer comprises at least 2 wt% of total weight of the first and second polymers, preferably at least 3 wt%, preferably at least 4 wt%; preferably no more than 40 wt%, preferably no more than 30 wt%, preferably no more than 20 wt%, preferably no more than 10 wt%. Preferably, the second polymer comprises at least 60 wt% of total weight of the first and second polymers, preferably at least 70 wt%, preferably at least 80 wt%, preferably at least 90 wt%; preferably no more than 98 wt%, preferably no more than 97 wt%, preferably no more than 96 wt.

Preferably, the first polymer has a weight average molecular weight (M_{w}) of at least 25,000, preferably at least 27,000, preferably at least 29,000; preferably no more than 90,000, preferably no more than 80,000, preferably no more than 70,000, preferably no more than 60,000, preferably no more than 50,000. Preferably, the second polymer has a weight average molecular weight (M_{w}) of at least 1,500; preferably no more than 40,000, preferably no more than 35,000, preferably no more than 30,000, preferably no more than 25,000. In a preferred embodiment, at least two second polymers are present, one having M_{w} from 1,000 to 10,000 (preferably no more than 8,000, preferably no more than 6,000, preferably no more than 4,000) and one having M_{w} from 5,000 to 45,000 (preferably at least 9,000, preferably at least 12,000, preferably at least 14,000; preferably no more than 40,000, preferably no more than 35,000, preferably no more than 30,000, preferably no more than 25,000).

In some embodiments, the first polymer further comprises one or more ethylenically unsaturated monomers such as esters of carboxylic acid anhydrides, imides, amides, styrenes, sulfonic acids, or a combination thereof. In some embodiments, this monomer is present in 1-30 wt % of the polymer. Sulfonic acid monomers include, for example, 2-(meth)acrylamido-2-methylpropanesulfonic acid, 4-styrenesulfonic acid, vinylsulfonic acid, 2-sulfoethyl(meth)acrylic acid, 2-sulfopropyl(meth)acrylic acid, 3-sulfopropyl(meth)acrylic acid, and 4-sulfobutyl(meth)acrylic acid and salts thereof. Further examples of ethylenically unsaturated monomers include, without limitation, maleic anhydride, vinyl acetic acid, acryloxypropionic acid, methyl acrylate, ethyl acrylate, butyl acrylate, methyl methacrylate, ethyl methacrylate, butyl methacrylate and isobutyl methacrylate; hydroxyalkyl esters of acrylic or methacrylic acids such as hydroxyethyl acrylate, hydroxypropyl acrylate, hydroxyethyl methacrylate, and hydroxypropyl methacrylate; acrylamide, methacrylamide, N-tertiary butyl acrylamide, N-methyl acrylamide, N,N-dimethyl acrylamide; acrylonitrile, methacryionitrile, allyl alcohol, allyl sulfonic acid, allyl phosphonic acid, vinylphosphonic acid, dimethylaminoethyl acrylate, dimethylaminoethyl methacrylate, phosphoethyl methacrylate, phosphonoethyl methacrylate (PEM), and sulfonoethyl methacrylate (SEM), N-vinyl pyrollidone, N-vinylformamide, N-vinylimidazole, ethylene glycol diacrylate, trimethylotpropane triacrylate, diallyl phthalate, vinyl acetate, styrene, divinyl benzene, allyl acrylate, 2-acrylamido-2-methyl propane sulfonic acid (AMPS) or its salts or a combination thereof.

The first polymer may be made by free-radical polymerization, e.g., free-radical emulsion polymerization in the presence of a C₂-C₂₄ alkanethiol. In a preferred embodiment, the first polymer is prepared by the free-radical emulsion polymerization technique, in which an agitated mixture of the ethylenically-unsaturated monomers, water, and a surfactant is reacted by the action of free-radicals generated by the decomposition of precursors such as alkali persulfates, azo compounds, or organic peracids, or peresters. The activation of these precursors may be by the action of elevated reaction temperature alone (thermal activation) or by the admixture of redox-active agents such as a combination of iron(II) sulfate and ascorbic acid (redox activation). In these cases, a chain-transfer agent is typically used to modulate polymer molecular weight. One class of preferred chain-transfer agents employed in emulsion polymerizations is the mercaptans (alkanethiols). Linear alkanethiols such as n-dodecyl mercaptan (n-dodecanethiol) are preferred. A minor amount of the chain transfer agent, such as n-dodecyl mercaptan, may be incorporated in the polymer, for instance up to 2 wt % based on the total weight of the polymer.

The second polymer may be prepared by free-radical polymerization. A preferred method for preparing these polymers is by homogeneous polymerization in a solvent. The solvent may be water or an alcoholic solvent such as 2-propanol or 1,2-propanediol. The free-radical polymerization is initiated by the decomposition of precursor compounds such as alkali persulfates or organic peracids and peresters. The activation of these precursors may be by the action of elevated reaction temperature alone (thermal activation) or by the admixture of redox-active agents such as a combination of iron(II) sulfate and ascorbic acid (redox activation). In these cases, a chain-transfer agent is typically used to modulate polymer molecular weight. One class of preferred chain-transfer agents employed in solution polymerizations is the alkali or ammonium bisulfites, preferably sodium meta-bisulfite. The second polymer may be end-capped with various groups, such as sulfonates or phosphonates. One or more of the monomers from which the second polymer is comprised may be in free acid form, or they may be present in neutralized (salt) form.

One or more of the first or second polymers of the polymer blend may be in at least partially neutralized (salt) form. Examples of suitable counterions for each neutralized polymer independently include, without limitation, sodium, potassium, or ammonium.

Preferably, an aqueous emulsion of one or more first polymers is combined with an aqueous solution of one or more second polymers. After mixing, the combined polymer mixture is optionally adjusted for pH, the mixture is dried prior to gross phase separation of the mixture.

The concentration of the first polymer(s) in the aqueous emulsion is not critical and may range, for instance, from 10 to 60 wt%, alternatively from 20 to 40 wt%. The concentration of the second polymer(s) in the aqueous solution is not critical and may range, for instance, from 10 to 60 weight percent, alternatively 20 to 50 weight percent, or 30 to 50 weight percent.

The pH may be measured directly on the aqueous solution or emulsion of the polymer that is to be used in this method; i.e., it is not necessary to dilute the solution or emulsion for the purpose of measuring pH. If desired, neutralization may be accomplished by gradual addition of sodium hydroxide (e.g., 5-50 wt % aqueous sodium hydroxide) or another base to the combined polymer mixture, while preferably maintaining a temperature below 60 °C. The combined polymer mixture may become highly viscous upon neutralization, and additional water may be added to lower the polymer concentration, as needed, to control viscosity.

Combination of the first and second polymers can be achieved, for instance, by adding one solution to the other, by adding the two solutions to another container, and/or by co-feeding the step (a) and step (b) solutions to equipment used in subsequent step(s). Mixing can be achieved by any technique that generally maintains the overall homogeneity of the liquid components of the mixture and includes, for instance, mixing using an overhead mixer, a magnetic stirbar, a flow through static mixing unit, or a flow through rotorstator mixer.

The polymer blend will sometimes phase separate after several hours. Preferably, drying the blend is carried out prior to gross phase separation of the mixture, although phase-separated blends typically reintegrate when agitated. Preferably, the blend is agitated after formation. Preferably, the blend is dried within one hour of mixing, preferably within 30 minutes, preferably within 15 minutes. "Gross phase separation" as used herein means phase separation that results in formation of observable 0.5 mm or greater sized particles at a volume concentration in the solution of approximately 1 percent or more. Optionally, various practices may be used for delaying gross phase separation of the mixture including, for instance, through continued mixing.

Techniques that may be employed for the drying of the combined polymer mixture include, but are not limited to, spray drying or fluid bed granulation, preferably spray drying. In a typical spray drying process, the first and second polymers may be co-fed to a holding tank and diluted, for instance to a concentration of about 25 to 35 wt %, to allow for spraying. The polymer blend may be heated, for instance to 50 to 60 °C, and stirred to prevent phase separation. The diluted polymer blend may be fed to a fluid bed dryer with a spray nozzle set to an inlet temperature and feed rates that are readily determined by the operator. For example, a temperature of 130 to 170 °C at a feed rate of the solution of 400 to 450 g/min may be suitable.

In a preferred embodiment, pH of the blend of the first and second polymers is increased to a value from 4.1 to 9 to form a second blend. Preferably, the second blend is agitated after formation. Preferably, the second blend is spray dried prior to gross phase separation, preferably within 30 minutes of reaching a pH from 4.1 to 9, preferably within 15 minutes, preferably within 5 minutes.

As noted above, in a further aspect, the polymer blend granules of the invention may be utilized in detergent compositions, such as laundry detergent compositions or dishwashing detergent compositions. Within such compositions, the polymer blend may function as an effective dispersant and/or spotting reduction agent. Detergent compositions of the invention preferably comprise a builder, a surfactant, and the polymer blend. The amount of polymer blend (total amount of the first polymer(s) and the second polymer(s)) present in the detergent composition preferably ranges from 0.5 to 15 wt %, preferably from 1 to 10 wt %, based on the total weight of the composition, although other amounts may be used and can be readily determined by the formulator.

### Examples

Polymer 1 was prepared using standard emulsion polymerization techniques from a monomer mixture comprising 72% AA and 28% AMPS. It has M_{w}=
18,366, Mn=4,514

### Polymer 1 / Polymer 2* formulation experiments

Objective: To prepare formulation blends of polymer 1 and polymer 2 with slow additions of polymer 3 & polymer 4 emulsions to determine stability & to dry in the oven for further experiments.

### Procedure: Run 1

- Mixed together a 734 gram batch of polymer 1 & polymer 2 by adding 474 grams of polymer 1 to a 1 liter beaker & began mixing using an overhead mixer at 700 RPM's.
- Added 260 grams of polymer 2 into the mixing polymer 1 then pH was measured at 3.78.
- Slow-added 36.7 grams of polymer 3** then pH was measured at 3.74.
- After the sample mixed thoroughly, the stirring was stopped & half the total volume (385.35 grams) was poured off into a tared 36 oz. aluminum pan.
- After 1.5 hours in the 150C oven, the sample was bubbling vigorously & a decision was then made to discard the sample.
- The other half of the sample in the 1 liter beaker was white & appeared stable.
   * AA homopolymer with M_{w} = 2,000 and pH 3.5
   ** 65 MAA/17.5 EA/17.5 BA, Mw = 30,000

### Procedure: (Run 2)

- Mixed together a 734 gram batch of polymer 1 & polymer 2 by adding 474 grams of polymer 1 to a 1 liter beaker & began mixing using an overhead mixer at 700 RPM's.
- Added 260 grams of polymer 2 into the mixing polymer 1 then pH was measured at 3.78.
- Slow-added 36.7 grams of polymer 4* then pH was measured at 3.73.
- After the sample mixed thoroughly, the stirring was stopped & half the total volume (385.35 grams) was poured off into a tared 36 oz. aluminum pan.
- The mixture is stable for 1 hour with regard to phase separation.
   * 15 AA/27 MAA/58 EA, M_{w} = 40KDa

### Procedure: (Run 3 using the remaining Run 1 sample)

- Added 25 grams into a 1 oz. vial for stability testing over time & the rest of the sample (191.6 grams) of sample 1
   (polymer 1/polymer 2/ polymer 3) was added to the deep steam table pan & inserted pan into 150C oven for 3 hours then transferred to the vacuum oven for additional drying overnight.
- Next day, the pan with the dried polymer was taken out of the vacuum oven & weighed at 112.95 grams.
- % Solids was calculated as follows: 112.95 grams (OD weight) - 30.15 (Pan tare weight) / 191.6 grams (Polymer weight)
   * 100 = 43.22 % Solids.

## Claims

1. A method for producing a blend of at least one first polymer and at least one second polymer; wherein the first polymer comprises: (a) polymerized units of 22 to 80 wt % of one or more monoethylenically unsaturated C₃-C₆ carboxylic acid monomers, and (b) polymerized units of 20 to 78 wt % of one or more C₁-C₁₂ alkyl (meth)acrylate monomers, and has a weight-average molecular weight from 20,000 to 100,000; and wherein the second polymer comprises polymerized units of 50 to 100 wt% of one or more monoethylenically unsaturated C₃-C₆ carboxylic acid monomers and has a weight-average molecular weight from 1,000 to 45,000; and wherein the first polymer comprises from 1 to 50 wt% of total weight of the first and second polymers; said method comprising combining at least one first polymer at a pH from 3 to 4 with at least one second polymer at a pH from 2 to 4 to form the blend, wherein the weight-average molecular weights are determined according to the method disclosed in the description.

2. The method of claim 1 in which the first polymer comprises: (a) polymerized units of 40 to 75 wt % of one or more monoethylenically unsaturated C₃-C₆ carboxylic acid monomers, and (b) polymerized units of 25 to 60 wt % of one or more C₁-C₁₂ alkyl (meth)acrylate monomers.

3. The method of claim 2 in which the first polymer comprises from 2 to 20 wt% of total weight of the first and second polymers.

4. The method of claim 3 in which the weight-average molecular weight of the first polymer is from 23,000 to 70,000.

5. The method of claim 4 in which the weight-average molecular weight of the second polymer is from 1,000 to 30,000.

6. The method of claim 5 in which the second polymer comprises polymerized units of 65 to 100 wt% of one or more monoethylenically unsaturated C₃-C₆ carboxylic acid monomers.

7. The method of claim 6 in which the second polymer comprises polymerized units of 65 to 100 wt% of acrylic acid or methacrylic acid.

8. The method of claim 7 further comprising drying the blend.

9. The method of claim 3 in which pH of the blend is increased to a value from 4.1 to 9 to form a second blend.

10. The method of claim 9 in which the second blend is dried prior to gross phase separation.

## Patentansprüche

1. Ein Verfahren zum Herstellen einer Mischung aus mindestens einem ersten Polymer und mindestens einem zweiten Polymer; wobei das erste Polymer Folgendes beinhaltet: (a) polymerisierte Einheiten von zu 22 bis 80 Gew.-% einem oder mehreren monoethylenisch ungesättigten C₃-C₆-Carbonsäuremonomeren und (b) polymerisierte Einheiten von zu 20 bis 78 Gew.-% einem oder mehreren
C₁-C₁₂-Alkyl(meth)acrylatmonomeren, und ein gewichtsmittleres Molekulargewicht von 20 000 bis 100 000 aufweist; und wobei das zweite Polymer polymerisierte Einheiten von zu 50 bis 100 Gew.-% einem oder mehreren monoethylenisch ungesättigten C₃-C₆-Carbonsäuremonomeren beinhaltet und ein gewichtsmittleres Molekulargewicht von 1 000 bis 45 000 aufweist; und wobei das erste Polymer 1 bis 50 Gew.-% des Gesamtgewichts des ersten und des zweiten Polymers ausmacht; wobei das Verfahren das Kombinieren mindestens eines ersten Polymers mit einem pH-Wert von 3 bis 4 und mindestens eines zweiten Polymers mit einem pH-Wert von 2 bis 4 beinhaltet, um die Mischung zu bilden, wobei die gewichtsmittleren Molekulargewichte gemäß dem in der Beschreibung offenbarten Verfahren bestimmt werden.

2. Verfahren gemäß Anspruch 1, wobei das erste Polymer Folgendes beinhaltet:
(a) polymerisierte Einheiten von zu 40 bis 75 Gew.-% einem oder mehreren monoethylenisch ungesättigten C₃-C₆-Carbonsäuremonomeren und (b) polymerisierte Einheiten von zu 25 bis 60 Gew.-% einem oder mehreren
C₁-C₁₂-Alkyl(meth)acrylatmonomeren.

3. Verfahren gemäß Anspruch 2, wobei das erste Polymer 2 bis 20 Gew.-% des Gesamtgewichts des ersten und des zweiten Polymers ausmacht.

4. Verfahren gemäß Anspruch 3, wobei das gewichtsmittlere Molekulargewicht des ersten Polymers von 23 000 bis 70 000 beträgt.

5. Verfahren gemäß Anspruch 4, wobei das gewichtsmittlere Molekulargewicht des zweiten Polymers von 1 000 bis 30 000 beträgt.

6. Verfahren gemäß Anspruch 5, wobei das zweite Polymer polymerisierte Einheiten von zu 65 bis 100 Gew.-% einem oder mehreren monoethylenisch ungesättigten C₃-C₆-Carbonsäuremonomeren beinhaltet.

7. Verfahren gemäß Anspruch 6, wobei das zweite Polymer polymerisierte Einheiten von zu 65 bis 100 Gew.-% Acrylsäure oder Methacrylsäure beinhaltet.

8. Verfahren gemäß Anspruch 7, das ferner das Trocknen der Mischung beinhaltet.

9. Verfahren gemäß Anspruch 3, wobei der pH-Wert der Mischung auf einen Wert von 4,1 bis 9 erhöht wird, um eine zweite Mischung zu bilden.

10. Verfahren gemäß Anspruch 9, wobei die zweite Mischung vor der groben Phasentrennung getrocknet wird.

## Revendications

1. Un procédé pour produire un mélange homogène d'au moins un premier polymère et d'au moins un deuxième polymère ; où le premier polymère comprend : (a) des unités polymérisées de 22 à 80 % en poids d'un ou de plusieurs monomères d'acide carboxylique en C₃-C₆ monoéthyléniquement insaturés, et (b) des unités polymérisées de 20 à 78 % en poids d'un ou de plusieurs monomères de (méth)acrylate d'alkyle en C₁-C₁₂, et a une masse moléculaire moyenne en poids allant de 20 000 à 100 000 ; et où le deuxième polymère comprend des unités polymérisées de 50 à 100 % en poids d'un ou de plusieurs monomères d'acide carboxylique en C₃-C₆ monoéthyléniquement insaturés et a une masse moléculaire moyenne en poids allant de 1 000 à 45 000 ; et où le premier polymère comprend de 1 à 50 % en poids du poids total des premier et deuxième polymères ; ledit procédé comprenant la combinaison d'au moins un premier polymère à un pH allant de 3 à 4 avec au moins un deuxième polymère à un pH allant de 2 à 4 afin de former le mélange homogène, où les masses moléculaires moyennes en poids sont déterminées selon le procédé divulgué dans la description.

2. Le procédé de la revendication 1 dans lequel le premier polymère comprend : (a) des unités polymérisées de 40 à 75 % en poids d'un ou de plusieurs monomères d'acide carboxylique en C₃-C₆ monoéthyléniquement insaturés, et (b) des unités polymérisées de 25 à 60 % en poids d'un ou de plusieurs monomères de (méth)acrylate d'alkyle en C₁-C₁₂.

3. Le procédé de la revendication 2 dans lequel le premier polymère comprend de 2 à 20 % en poids du poids total des premier et deuxième polymères.

4. Le procédé de la revendication 3 dans lequel la masse moléculaire moyenne en poids du premier polymère va de 23 000 à 70 000.

5. Le procédé de la revendication 4 dans lequel la masse moléculaire moyenne en poids du deuxième polymère va de 1 000 à 30 000.

6. Le procédé de la revendication 5 dans lequel le deuxième polymère comprend des unités polymérisées de 65 à 100 % en poids d'un ou de plusieurs monomères d'acide carboxylique en C₃-C₆ monoéthyléniquement insaturés.

7. Le procédé de la revendication 6 dans lequel le deuxième polymère comprend des unités polymérisées de 65 à 100 % en poids d'acide acrylique ou d'acide méthacrylique.

8. Le procédé de la revendication 7 comprenant en outre le séchage du mélange homogène.

9. Le procédé de la revendication 3 dans lequel le pH du mélange homogène est augmenté à une valeur allant de 4,1 à 9 afin de former un deuxième mélange homogène.

10. Le procédé de la revendication 9 dans lequel le deuxième mélange homogène est séché avant une séparation de phases grossière.
